# FASCICULE DE BREVET EUROPEEN

(11) **EP 0 627 828 B1**
(45) Date de publication et mention de la délivrance du brevet: **26.05.1999**
(21) Numéro de dépôt: 94401167.5
(22) Date de dépôt: 26.05.1994
(51) Int. Cl.: H04B 7/26, H04Q 7/20

(54) **Procédé d'échange de données entre une station de base d'un réseau de radiocommunications mobiles et un mobile évoluant dans le réseau**
Verfahren zum Datenaustausch zwischen Basisstation eines Mobilfunkkommunikationsnetzes und Mobilstation dieses Netzes
Method for data exchange between base station of a mobile communication network and mobile station of the network

(30) Priorité: 28.05.1993 FR 9306426
(43) Date de publication de la demande: 07.12.1994
(73) Titulaire: Alcatel, 75382 Paris Cédex 08 (FR)
(72) Inventeur: Dupuy, Pierre, F-75017 Paris (FR)
(74) Mandataire: Lamoureux, Bernard

(56) Documents cités:
- EP-A- 0 480 505
- WO-A-84/00654
- GB-A- 2 211 699

## Description

La présente invention concerne un procédé d'échange de données entre une station de base d'un réseau de radiocommunications mobiles, par exemple de type GSM (Global System for Mobile communications) et un mobile évoluant dans ce réseau.

Un réseau cellulaire de radiocommunications mobiles comporte notamment une pluralité de stations de base réparties géographiquement. Chacune de ces stations de base est destinée à la couverture radio d'une zone géographique particulière appelée cellule. Chaque station de base se trouve en général au centre de la cellule associée ; elle est désignée par l'abréviation BTS, pour Base Transceiver Station en anglais.

Ainsi, l'espace est subdivisé en cellules, et un mobile (comme par exemple un radiotéléphone) évoluant dans l'espace couvert par un tel réseau de stations de base peut toujours être rattaché à une cellule donnée, de sorte qu'il échange des données utiles (de parole le plus souvent) et des données de signalisation, sous forme de signaux radio, avec la station de base couvrant la cellule dans laquelle il se trouve.

Lorsque l'utilisateur d'un mobile souhaite établir une communication, c'est-à-dire transmettre et recevoir des données de parole, avec l'utilisateur d'un autre mobile ou un utilisateur fixe, les données de parole sont échangées par l'intermédiaire de la station de base correspondante, qui est munie à cet effet d'au moins un émetteur et au moins un récepteur associés à au moins une antenne.

L'antenne de la BTS peut être omnidirectionnelle et émettre dans toutes les directions des signaux ayant une puissance élevée.

En revanche, on sait que les signaux reçus par une antenne peu directive sont de moins bonne qualité que ceux reçus par une antenne très directive. Ainsi, pour que les signaux émis par les mobiles soient exploitables par la BTS munie d'une antenne omnidirectionnelle, leur puissance d'émission au départ des mobiles doit être élevée.

Or, la puissance d'émission des mobiles est limitée, afin notamment d'augmenter leur autonomie, de sorte que lorsqu'ils sont trop éloignés du centre de la cellule, la réception au niveau de la BTS est mauvaise, le signal ayant alors un niveau trop faible pour être distingué des interférences ou du bruit.

Une méthode pour pallier cet inconvénient consiste à subdiviser les cellules, surtout celles dites de grande couverture (c'est-à-dire ayant un rayon de l'ordre de plusieurs kilomètres), en une pluralité de cellules élémentaires, appelées secteurs, disposées en faisceau autour de la BTS de la cellule initiale, appelée cellule principale. Ainsi, une cellule peut être divisée en trois, six ou douze secteurs par exemple, selon sa taille, le trafic de communications dans la zone qu'elle couvre et la puissance des mobiles qu'elle doit pouvoir recevoir.

Chacune des cellules élémentaires est alors munie d'une antenne directive, toutes les antennes directives étant rassemblées au même endroit, en général au centre de la cellule principale. Par abus de langage, on continuera d'appeler l'ensemble constitué par tous les secteurs une cellule, bien que chaque secteur constitue une cellule indépendante dans le sens défini plus haut.

Deux types principaux de données, du type de celles échangées sur le réseau RNIS (Réseau Numérique à Intégration de Services), peuvent être échangés entre un mobile et la station de base de la cellule dans laquelle il se trouve :
- des données dites utiles, c'est-à-dire de la voix (données de parole) ou des données informatiques,
- des données dites de signalisation et de contrôle, qui contiennent notamment des informations permettant au mobile de se connecter au réseau cellulaire (cette connexion est couramment appelée "Accès"), ou bien de maintenir une communication en cours alors qu'il change de cellule (ce changement est couramment appelé "Handover").

Ainsi, à chaque cellule principale est associé un jeu de fréquences comprenant au moins : une fréquence, appelée voie balise descendante, pour la transmission dans le sens descendant (c'est-à-dire dans le sens station de base vers mobile) des données de signalisation générale, la voie balise descendante étant associée à une fréquence dite voie balise montante, pour la transmission dans le sens montant (c'est-à-dire dans le sens mobile vers station de base) des données de signalisation générale, cette voie balise étant dénommée BCCH (pour Broadcast Control Channel) dans la terminologie GSM.

Pour la transmission des données utiles, on peut utiliser soit les canaux non utilisés pour la signalisation sur les voies balises montante et descendante, soit, lorsque le trafic de communications dans la cellule est plus important, au moins une fréquence, dite fréquence de trafic descendante, formant un couple de fréquences avec une fréquence dite de trafic montante, pour la transmission dans le sens montant des données utiles.

Dans ce cas, les voies balises montante et descendante, ainsi que les fréquences de trafic montante et descendante, sont toutes deux à deux distinctes.

Dans le cas de cellules sectorisées d'une cellule de grande couverture et de faible trafic, à la fois une voie balise montante et une voie balise descendante sont associées à chaque cellule élémentaire, et chaque cellule élémentaire est donc munie d'un émetteur et d'un récepteur. Il se peut que seules ces deux fréquences suffisent pour assurer dans chaque cellule élémentaire la signalisation et le trafic.

Par suite de l'application dans les réseaux cellulaires de type GSM du principe d'Accès Multiple à Répartition dans le Temps (AMRT, ou TDMA en anglais pour Time Division Multiple Access), lorsqu'un mobile se connecte au réseau cellulaire, un canal de trafic TCH (pour Traffic CHannel) lui est affecté, ce canal de trafic correspondant à un intervalle de temps d'émission qui lui est réservé sur la voie balise montante (ou sur une fréquence de trafic montante particulière quand il en existe). Un canal de trafic correspondant lui est affecté pour la réception sur la voie balise descendante (ou sur la fréquence de trafic descendante formant un couple avec la fréquence de trafic montante quand il en existe). Le canal de trafic montant est décalé dans le temps par rapport au canal de trafic descendant.

En pratique, dans un réseau de type GSM, il est possible d'utiliser huit canaux par fréquence. Les intervalles de temps de la voie balise non utilisés pour la signalisation générale de la cellule étant également disponibles pour le trafic, il reste en général sept canaux de trafic sur la voie balise en plus du canal de signalisation.

Dans les zones rurales, où les cellules sont en général de grande couverture, de sorte qu'elles sont sectorisées, de nombreux canaux de trafic sont donc disponibles (puisqu'il existe au moins un couple de fréquences balises par cellule élémentaire), et très peu sont utilisés en pratique du fait de la très faible densité de communications. Or, la mise à disposition d'au moins un couple de fréquences balises par secteur impose à chaque secteur d'être muni d'un émetteur et d'un récepteur.

Par conséquent, le coût en équipements est élevé pour une faible utilisation des disponibilités, de sorte que la rentabilité d'un tel système est médiocre.

Le document WO 84/00654 décrit une station de base qui résout ce problème ; elle comporte un seul émetteur muni d'une antenne omnidirectionnelle et assurant la couverture radio à l'émission de toutes les cellules élémentaires, de sorte que les données transmises par la station de base sous forme de signaux radio à un mobile se trouvant dans l'une quelconque des cellules élémentaires sont émises par cet émetteur.

Selon le document WO 84/00654, le contrôle nécessaire lors de l'établissement de la connexion avec une station mobile ou lors du changement de cellule est effectué par la station de base elle-même. Ceci rend la station de base complexe et onéreuse. La présente invention a pour but de remédier à ce problème.

La présente invention propose à cet effet un procédé d'échange de données entre d'une part une station de base d'un réseau cellulaire de radiocommunications mobiles, destinée à échanger des données sous forme de signaux radio avec des mobiles évoluant dans une zone géographique délimitée appelée cellule principale, ladite cellule principale couvrant une pluralité de cellules dites élémentaires correspondant chacune à une portion déterminée de ladite cellule principale, et chacune associée à un récepteur muni d'une antenne directive, ladite station de base comportant un seul émetteur muni d'une antenne omnidirectionnelle et assurant la couverture radio à l'émission de toutes lesdites cellules élémentaires, et d'autre part un mobile évoluant dans ladite cellule principale, ledit échange de données étant notamment destiné à établir entre ledit mobile et ladite station de base une connexion radio, de sorte qu'un canal de trafic sur une fréquence de trafic montante et qu'un canal de trafic sur une fréquence de trafic descendante sont affectés audit mobile pour la transmission de données utiles, ledit procédé étant caractérisé en ce qu'il comporte les opérations suivantes :
- ledit mobile émet en direction de ladite station de base, sur un canal spécifique dit d'accès sur une voie balise montante, au moins une demande de connexion, dite demande d'accès,
- un contrôleur de station de base ayant en charge ladite station de base détermine, pour chacun desdits récepteurs, le niveau et/ou la qualité du signal, dit d'accès, constitué par ladite demande et reçu au niveau de chacun desdits récepteurs, et sélectionne ainsi celui desdits récepteurs destiné à assurer la transmission des signaux de données utiles en provenance dudit mobile comme étant le récepteur pour lequel le signal d'accès a la meilleure qualité et/ou le meilleur niveau,
- un canal de trafic dit montant est affecté audit mobile sur ladite fréquence de trafic montante, ledit canal de trafic montant n'étant utilisé que pour ledit mobile,
- un canal de trafic correspondant, dit descendant, est affecté audit mobile sur ladite fréquence de trafic descendante, ce canal de trafic étant décalé dans le temps par rapport audit canal de trafic montant,
- chacun des autres mobiles évoluant dans ladite cellule principale et connecté à ladite station de base est associé à un canal de trafic descendant sur ladite fréquence de trafic descendante, décalé dans le temps par rapport à tous les canaux de trafic affectés aux autres mobiles sur ladite fréquence de trafic descendante, et à un canal de trafic montant sur ladite fréquence de trafic montante, décalé dans le temps par rapport à tous les canaux de trafic affectés aux autres mobiles sur ladite fréquence de trafic montante.

Ce procédé est avantageux car il permet au contrôleur de stations de base de contrôler directement l'établissement de la connexion, et donc de simplifier considérablement les opérations à effectuer par la station de base. Ceci est particulièrement intéressant, car la station de base peut alors être réduite au strict minimum, c'est-à-dire pratiquement ne comporter qu'un récepteur. On diminue ainsi nettement le coût en équipements.

Un procédé tel que décrit ci-dessus, destiné en outre à maintenir la connexion du mobile à la station de base lorsque le mobile passe de l'une des cellules élémentaires, dite ancienne cellule élémentaire, à une autre, dite nouvelle cellule élémentaire, comporte les opérations suivantes :
- pendant l'intervalle de temps correspondant au canal de trafic montant affecté au mobile, chaque récepteur, y compris celui, dit ancien récepteur, assurant la transmission des signaux de données utiles émis par le mobile, reçoit les signaux de données utiles émis par le mobile,
- après démodulation de chaque signal de données utiles, le signal obtenu par combinaison des signaux de données utiles est ramené en bande de base et transmis au contrôleur,
- la communication se poursuit sur le même canal de trafic montant par l'intermédiaire d'un nouveau récepteur.

Un autre procédé d'échange de données destiné à maintenir la connexion du mobile à la station de base lorsque le mobile passe de l'une des cellules élémentaires, dite ancienne cellule élémentaire, à une autre, dite nouvelle cellule élémentaire, comporte les opérations suivantes :
- pendant l'intervalle de temps correspondant au canal de trafic montant affecté au mobile, chaque récepteur, y compris celui, dit ancien récepteur, assurant la transmission des signaux de données utiles émis par le mobile, reçoit les signaux de données utiles émis par le mobile,
- les signaux de données utiles issus de chaque récepteur sont ramenés en bande de base, puis transmis au contrôleur de station de base,
- le contrôleur de station de base interrompt la communication et sélectionne, selon un ou plusieurs critères prédéterminés, celui des récepteurs destiné à assurer la poursuite de la communication, et donc la transmission des signaux de données utiles en provenance du mobile au contrôleur de station de base,
- la communication est rétablie sur le même canal de trafic montant,
- les signaux de données utiles et de données de signalisation en provenance du mobile et issus du récepteur sélectionné sont ramenés en bande de base puis transmis au contrôleur.

Le critère utilisé peut être le niveau de réception au sein de chaque récepteur ou la qualité, avant ou après décodage, du signal issu de chaque récepteur, ou une combinaison de ces deux critères.

Les deux derniers procédés qui viennent d'être décrits sont des procédés permettant d'effectuer le handover.

Alors que dans les procédés de handover classiques, le mobile détermine en permanence la qualité du signal reçu sur la voie balise descendante de chacune des cellules environnantes, une telle mesure n'est pas possible dans le cas d'une station de base telle que décrite dans le document WO 84/00654, puisqu'il n'existe qu'une seule voie balise descendante pour cette cellule principale. Les procédés précédents permettent de maintenir la connexion en utilisant une méthode différente de celle de la mesure de la qualité de la voie balise descendante.

L'invention concerne aussi une station de base et un contrôleur de stations de base adaptés à la mise en oeuvre des procédés précédents.

D'autres caractéristiques et avantages de la présente invention apparaîtront dans la description suivante d'un mode de mise en oeuvre de la présente invention, donné à titre illustratif et nullement limitatif.

Dans les figures suivantes :
- la figure 1 représente schématiquement la configuration d'une cellule sectorisée correspondant à la couverture géographique d'une station de base telle que décrite dans le document WO 84/00654,
- la figure 2 représente la répartition dans le temps du canal de diffusion et des canaux de trafic descendants,
- la figure 3 représente la répartition dans le temps du canal d'accès et des canaux de trafic montants,
- la figure 4 est un schéma montrant le procédé de sélection du récepteur utilisé pour la poursuite de la communication lors du handover,
- la figure 5 est un schéma montrant une variante du procédé de sélection de la figure 4.

Dans toutes ces figures, les éléments communs portent les mêmes numéros de référence.

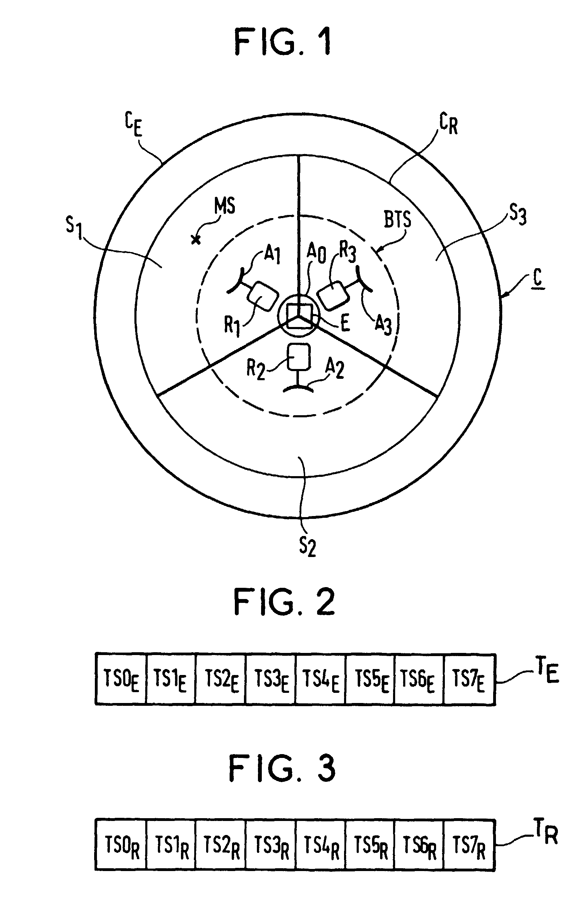

On a représenté schématiquement en figure 1 une cellule principale C correspondant à la couverture géographique d'une station de base BTS selon le document WO 84/00654.

Dans l'exemple choisi, la cellule C peut en général et pour simplifier être considérée comme circulaire, et la station de base BTS est située en son centre.

La cellule C est sectorisée, c'est-à-dire qu'elle est subdivisée en plusieurs cellules élémentaires ou secteurs (trois sur la figure 1) référencés S₁, S₂ et S₃.

La station de base BTS comprend, de manière très schématique :
- un émetteur E muni d'une antenne omnidirectionnelle A₀,
- trois récepteurs R₁, R₂ et R₃, chacun muni d'une antenne directive A₁, A₂ et A₃ assurant la couverture radio respectivement des secteurs S₁, S₂ et S₃.

Pour des raisons de clarté, on a représenté les récepteurs R₁, R₂ et R₃ légèrement décalés par rapport à l'émetteur E, mais il est bien évident que tous ces éléments se trouvent regroupés sensiblement sur le même site pour constituer la station de base BTS. L'ensemble comprenant les récepteurs et l'émetteur unique constitue la station de base.

La couverture de la station de base BTS n'est pas la même dans les deux sens de transmission (le sens montant et le sens descendant). En effet, dans le sens descendant, la cellule C est équivalente à une cellule non sectorisée avec un seul émetteur.

Dans le sens montant, la cellule C est, de manière simplifiée, équivalente à une cellule sectorisée avec un récepteur par secteur.

C'est la raison pour laquelle deux contours différents ont été représentés pour la cellule C :
- un premier contour C_{E} définissant la cellule telle qu'elle apparaît dans le sens descendant,
- un deuxième contour C_{R} définissant la cellule telle qu'elle apparaît dans le sens montant.

Pour des raisons de clarté, les contours C_{E} et C_{R} ne sont pas superposés sur la figure, mais on comprend bien qu'ils sont confondus dans la pratique.

Les fréquences disponibles pour les échanges de données dans la cellule C sont les suivantes :
- une fréquence de trafic, dite descendante, pour véhiculer les données utiles de la station de base BTS vers un ou plusieurs mobiles MS,
- une fréquence de signalisation descendante, appelée voie balise descendante et distincte de la fréquence de trafic descendante,
- une fréquence de trafic, dite montante, pour véhiculer les données utiles des mobiles MS vers la station de base BTS, la fréquence de trafic montante étant distincte de la voie balise descendante et de la fréquence de trafic descendante,
- une fréquence de signalisation montante, appelée voie balise montante, distincte de toutes les autres fréquences qui viennent d'être définies.

Bien entendu, lorsque, le trafic est faible et comme indiqué plus haut, les deux fréquences de signalisation peuvent être suffisantes.

On a représenté en figure 2, de manière très simplifiée, la répartition en fonction du temps des différents canaux de trafic véhiculés sur la fréquence de trafic descendante, et du canal dit de diffusion, véhiculé sur la voie balise descendante et destiné à transmettre des données de signalisation et de contrôle (comprenant notamment des informations nécessaires aux mobiles pour qu'ils puissent se connecter à la station de base BTS, des informations de synchronisation, des informations de contrôle, etc...) à tous les mobiles MS se trouvant dans la cellule C.

De même, on a représenté en figure 3, de manière très simplifiée, la répartition en fonction du temps des différents canaux de trafic véhiculés sur la fréquence de trafic montante, et du canal dit d'accès RACH (pour Random Access CHannel), véhiculé sur la voie balise montante et destiné à transmettre des données de signalisation (constituées de demandes d'accès des mobiles MS) à la station de base BTS.

De manière générale, un canal quelconque est constitué par la répétition périodique (la période dépendant du type de canal considéré) d'un intervalle de temps sur une fréquence déterminée (dépendant elle aussi du type de canal concerné). En pratique, le temps est divisé en trames, chaque trame étant divisée en huit intervalles de temps (Time Slots).

Un schéma de trame T_{E}, représenté en figure 2, est utilisé par la station de base BTS à l'émission ; la trame T_{E} est subdivisée en huit intervalles de temps référencés TS0_{E} à TS7_{E}. L'intervalle de temps TS0_{E} est alloué au canal de diffusion véhiculé par la voie balise descendante, à l'attention de tous les mobiles se trouvant dans la cellule C, et les intervalles de temps TS1_{E} à TS7_{E} sont alloués aux canaux de trafic descendants. Un canal de trafic descendant distinct est affecté à chaque mobile se trouvant dans la cellule C.

La période séparant deux intervalles de temps de type TS0_{E} est supérieure à celle séparant deux intervalles de temps alloués à un canal de trafic descendant donné, c'est-à-dire à un mobile donné, de sorte que sept ou huit mobiles peuvent recevoir des signaux radio de la station de base BTS sur la fréquence de trafic descendante.

La figure 3 représente le schéma d'une trame T_{R}, utilisé par la station de base BTS à la réception en provenance de l'un quelconque des secteurs S₁, S₂ ou S₃ ; le schéma de trame est le même dans les trois secteurs. La trame T_{R} est subdivisée en huit intervalles de temps TS0_{R} à TS7_{R}. L'intervalle de temps TS0_{R} est alloué au canal d'accès véhiculé par la voie balise montante, et peut donc être utilisé par n'importe quel mobile MS, où qu'il se trouve dans la cellule C.

Par ailleurs, les intervalles de temps TS1_{R} à TS7_{R} sont alloués aux canaux de trafic montants. Contrairement à l'utilisation du canal d'accès, un canal de trafic montant distinct est affecté à chaque mobile MS. Les périodes de répétition du canal d'accès et des canaux de trafic descendants sont tels que sept ou huit mobiles peuvent émettre des signaux radio sur la fréquence de trafic descendante.

On va maintenant s'attacher à décrire le procédé selon l'invention permettant à un mobile MS d'échanger avec la station de base BTS des données lui permettant de se connecter à cette dernière.

De manière classique dans le système GSM, lorsqu'un mobile souhaite se connecter au réseau par l'intermédiaire d'une station de base, c'est-à-dire se voir affecter une fréquence de trafic montante et une fréquence de trafic descendante, et sur chacune de ces fréquences, un canal de trafic lui permettant de communiquer, il commence par déterminer (par exemple au moyen de mesures de niveau de réception) la voie balise descendante qu'il reçoit le mieux (on précise ici qu'à cette fin, un signal est en permanence émis par la station de base BTS de chaque secteur ou cellule sur sa voie balise descendante), puis émet sur le canal d'accès de la voie balise montante associée des signaux appelés demandes d'accès. Une fois la demande d'accès du mobile reçue, un canal de trafic montant et un canal de trafic descendant sont alloués au mobile.

Dans le cas classique, chaque cellule, ou chaque secteur, a sa propre voie balise montante, de sorte qu'il est aisé pour le mobile de déterminer son secteur ou sa cellule de rattachement, en identifiant la voie balise descendante la mieux reçue. Ainsi, les demandes d'accès émises par le mobile sur la voie balise montante associée à la voie balise descendante la mieux reçue sont reçues par le seul récepteur associé au secteur correspondant à cette voie balise montante. Ce n'est pas le cas avec la station de base de la figure 1.

En effet, dans cette station de base, il n'existe qu'un seul couple de voies balises pour les trois secteurs. Ainsi, le mobile émet une ou plusieurs demandes d'accès sur la voie balise montante, et chacun des récepteurs R₁, R₂ et R₃ reçoit cette (ces) demande(s) d'accès.

Pour déterminer à quel secteur le mobile MS doit être rattaché, et par conséquent pour déterminer quel récepteur sera choisi pour transmettre les signaux de données utiles ou de données de signalisation émis par le mobile MS, le contrôleur de stations de base ayant en charge la station de base BTS détermine le niveau et/ou la qualité de la réception du signal constitué de la demande d'accès au sein de chacun des récepteurs R₁, R₂ et R₃. Le récepteur choisi est alors celui au sein duquel la qualité et/ou le niveau de la réception de la demande d'accès sont les meilleurs.

Une fois le récepteur déterminé, le canal de trafic alloué au mobile MS sur la fréquence de trafic montante, c'est-à-dire en pratique le numéro de l'intervalle de temps qui lui est réservé pour émettre des signaux radio, est déterminé en fonction des canaux de trafic montants déjà utilisés par d'autres mobiles : seul un canal de trafic montant correspondant à un intervalle de temps de rang non encore utilisé peut être affecté au mobile. En outre, l'intervalle de temps 0 est affecté au canal d'accès avec une période de répétition supérieure à celle des canaux de trafic, de sorte qu'il peut également être utilisé pour un canal de trafic.

Pour permettre les échanges de données utiles dans le sens descendant, un canal de trafic sur la fréquence de trafic descendante est également affecté au mobile MS. Ce canal de trafic descendant est décalé de plusieurs intervalles de temps (par exemple trois) par rapport au canal de trafic montant correspondant.

En pratique, le récepteur choisi pour recevoir et transmettre les données du canal montant est également celui qui transmet les données de signalisation en provenance du mobile. Les autres récepteurs sont également capables de recevoir les données utiles et de signalisation en provenance du mobile, mais ne les transmettent pas et sont uniquement utilisés, comme on le verra plus loin en relation avec les procédés de handover, pour effectuer le choix du meilleur récepteur.

Un autre procédé qu'il est important de décrire dans le cadre de l'invention est celui destiné à maintenir la communication en cours du mobile MS lorsque ce dernier passe par exemple du secteur S₁ au secteur S₂.

Par abus de langage mais pour des raisons de clarté de l'exposé, on appellera ce procédé "handover".

Dans le handover classique, le mobile mesure le niveau de réception de la voie balise descendante de chacune des cellules voisines de celle à laquelle il est rattaché, et il envoie régulièrement, sur un canal spécifique appelé SACCH (Slow Associated Control CHannel), les résultats de ces mesures à la station de base à laquelle il est rattaché. Il est alors possible à un organe de contrôle appelé BSC (Base Station Controller) ayant sous son contrôle un certain nombre de stations de base dont celle à laquelle le mobile est rattaché, de déterminer à quel moment il est opportun que le rattachement du mobile change. Pour simplifier, lorsque le niveau de réception de la voie balise descendante associée à la cellule à laquelle est rattaché le mobile est inférieur au niveau de réception de la voie balise descendante d'une cellule voisine, la procédure de handover sera déclenchée.

On comprend bien que dans le cas de la station de base de la figure 1, étant donné qu'il n'y a qu'une seule voie balise descendante pour toutes les cellules élémentaires ou secteurs, la procédure classique ne peut être utilisée.

Comme les récepteurs autres que celui du secteur auquel est rattaché le mobile MS ne sont pas utilisés par d'autres mobiles sur l'intervalle de temps correspondant au canal de trafic montant utilisé par le mobile MS, ces récepteurs peuvent recevoir également les signaux émis par le mobile MS sur la fréquence de trafic montante.

Plusieurs options sont alors possibles en pratique.

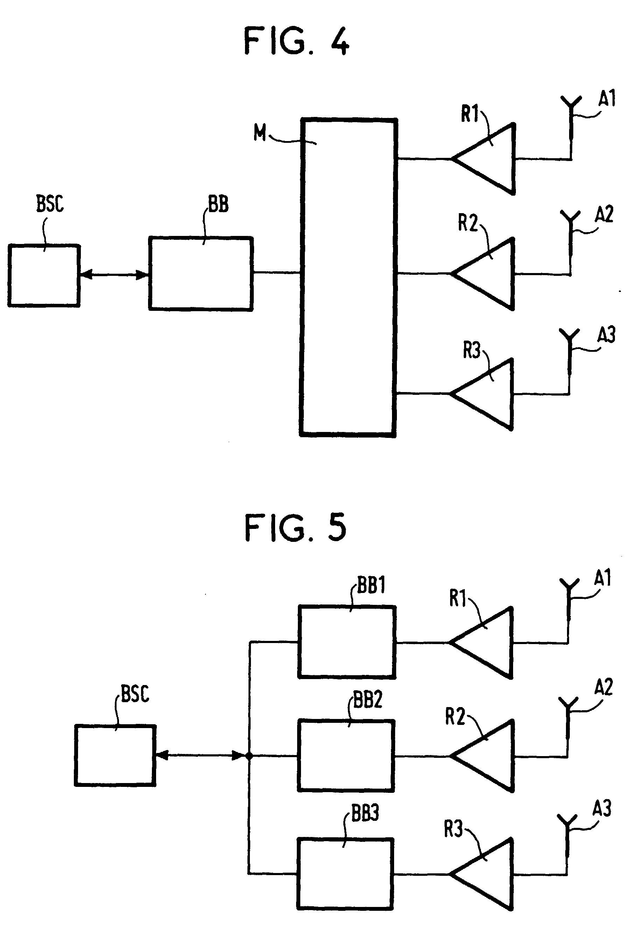

Selon une première option, le "handover" peut être décidé localement au niveau de la station BTS : c'est elle qui sélectionne celui des récepteurs R₁, R₂ ou R₃ qui sera effectivement utilisé pour transmettre les signaux émis par le mobile MS. Comme on le voit en figure 4, une opération de sélection est effectuée au sein de la BTS au moyen d'une "matrice" de sélection M, en sortie des récepteurs R₁, R₂ ou R₃. La matrice M sélectionne le récepteur destiné à être utilisé pour la transmission en choisissant, selon un ou plusieurs critères prédéterminés, celui des signaux issus des trois récepteurs R₁, R₂ ou R₃ qui sera effectivement transmis. Le signal sélectionné est ensuite ramené en bande de base par le dispositif BB puis transmis à un contrôleur de station de base BSC ayant en charge la station de base BTS et permettant de transmettre le message à son destinataire.

Un premier critère de sélection peut consister à sélectionner le récepteur qui reçoit le mieux le mobile, 5 c'est-à-dire par exemple celui qui reçoit les signaux de plus grande puissance, ou celui qui reçoit les signaux de meilleure qualité, cette qualité étant déterminée avant ou après décodage. On peut aussi effectuer la sélection en combinant les deux critères précédents.

La communication en cours se poursuit alors par l'intermédiaire du récepteur sélectionné, c'est-à-dire qu'en pratique, le signal transmis, qu'il contienne des données utiles ou de signalisation, est celui qui provient du récepteur sélectionné. Les autres récepteurs continuent de recevoir les signaux émis par le mobile, pour permettre d'effectuer la sélection précédente chaque fois que cela est nécessaire.

On peut ainsi décider qu'à chaque intervalle de temps, une opération de sélection telle que définie ci-dessus sera effectuée. Une telle possibilité peut être retenue notamment si la matrice de sélection M peut déterminer très rapidement le meilleur des trois récepteurs, par exemple en retardant pendant un temps suffisant les signaux reçus pour pouvoir mesurer leur niveau de puissance.

Selon un autre mode de sélection, une combinaison des signaux reçus par les trois récepteurs est effectuée au sein de la matrice de sélection M après démodulation de ces signaux, selon un principe rappelant celui de la diversité d'antenne. C'est le signal issu de la combinaison qui est transmis au BSC par l'intermédiaire du dispositif BB.

La première option qui vient d'être décrite est dite "transparente" pour le mobile, c'est-à-dire que le mobile est passif lors du "handover" (le terme handover est employé ici entre guillemets car la procédure mise en oeuvre ne peut être qualifiée à proprement parler de handover ; en effet, lors d'un handover classique, la fréquence de trafic allouée au mobile change, et c'est le BSC qui intervient en commandant ce changement).

Selon une deuxième option, qui n'est plus transparente pour le mobile, le handover est effectué par l'intermédiaire du BSC. Comme on le voit en figure 5 les signaux issus des récepteurs R₁, R₂ et R₃ sont ramenés en bande de base au moyen des dispositifs BB₁, BB₂ et BB₃, et c'est au sein du BSC qu'est effectué, après interruption de la communication en cours, le choix du récepteur permettant de poursuivre la communication. Ce récepteur sera celui utilisé pour transmettre à la fois les données utiles et de signalisation en provenance du mobile MS ; les autres récepteurs continuent de recevoir les signaux émis par le mobile, mais servent seulement à effectuer la sélection opérée par le BSC en fonction du niveau et/ou de la qualité.

Comme dans le cas du handover classique, le BSC envoie donc des messages de commande au mobile, notamment pour lui demander de rétablir la connexion après le handover, mais sans changer de canal de trafic. Ici encore, le handover est fictif puisque la fréquence de la communication ne change pas, et que l'on rétablit la connexion du mobile après le handover en gardant le même canal de trafic.

L'avantage de cette deuxième option par rapport à la précédente réside dans le fait que le protocole de handover au sein de la station de base est identique à celui utilisé dans la procédure de handover classique avec des stations de base de l'art antérieur. Dans ce cas, seul le protocole au niveau du contrôleur de station de base change, de sorte que le coût de la station de base en est diminué.

Bien entendu, l'invention n'est pas limitée au mode de réalisation qui vient d'être décrit.

En particulier, l'invention s'applique non seulement à un réseau cellulaire de type GSM, mais également à tout autre type de réseau cellulaire.

Par ailleurs, l'invention, même si elle présente de nombreux avantages dans son application à des cellules de grande couverture en zone rurale, peut tout aussi bien être appliquée à des stations de base pour cellules de couverture quelconque, du moment qu'elle rend disponible un nombre suffisant de canaux de trafic compte tenu du trafic de communications attendu.

Les procédés de rattachement et de handover décrits en relation avec une station de base selon l'invention se rapportent à un réseau cellulaire de type GSM. Il est bien évident qu'ils peuvent être adaptés, sans sortir du cadre de l'invention, à tout type de réseau cellulaire.

Dans le procédé de rattachement, la sélection du récepteur offrant la meilleure qualité et/ou le meilleur niveau peut être effectuée de la même manière que dans les procédés de handover selon l'invention, c'est-à-dire soit par la BTS, au moyen de la matrice de sélection M, soit par le BSC par des procédures analogues à celles utilisées pour le handover classique.

D'autre part, ces procédés ont été décrits, pour des raisons de clarté de l'exposé, en prenant comme exemple une organisation des canaux à l'intérieur de la cellule extrêmement simplifiée. Il est bien évident qu'il est à la portée de l'homme du métier d'adapter ces procédés à des organisations de canaux plus complexes, et ce sans sortir du cadre de l'invention.

Notamment, on remarquera que lorsque le canal de diffusion correspondant à l'intervalle de temps 0 est partagé en plusieurs sous-canaux, un premier sous-canal réservé à la diffusion telle qu'elle a été décrite dans ce qui précède, et au moins un deuxième sous-canal réservé à un canal dénommé SDCCH (Stand-Alone Dedicated Control CHannel) dans la terminologie GSM, ce deuxième sous-canal ne peut être utilisé simultanément dans plusieurs secteurs distincts, à la différence du sous-canal de diffusion. En revanche, plusieurs de ces sous-canaux peuvent être utilisés dans des secteurs distincts.

Enfin, on pourra remplacer tout moyen par un moyen équivalent sans sortir du cadre de l'invention.

## Revendications

1. Procédé d'échange de données entre d'une part une station de base d'un réseau cellulaire de radiocommunications mobiles, destinée à échanger des données sous forme de signaux radio avec des mobiles (MS) évoluant dans une zone géographique délimitée appelée cellule principale (C), ladite cellule principale (C) couvrant une pluralité de cellules dites élémentaires (S₁, S₂, S₃), correspondant chacune à une portion déterminée de ladite cellule principale (C), et chacune associée à un récepteur (R₁, R₂, R₃) muni d'une antenne directive (A₁, A₂, A₃), ladite station de base comportant un seul émetteur (E) muni d'une antenne omnidirectionnelle (A₀) et assurant la couverture radio à l'émission de toutes lesdites cellules élémentaires (S₁, S₂, S₃), et d'autre part un mobile évoluant dans ladite cellule principale, ledit échange de données étant notamment destiné à établir entre ledit mobile et ladite station de base une connexion radio, de sorte qu'un canal de trafic sur une fréquence de trafic montante et qu'un canal de trafic sur une fréquence de trafic descendante sont affectés audit mobile pour la transmission de données utiles,
ledit procédé comportant les opérations suivantes :
- ledit mobile émet en direction de ladite station de base, sur un canal spécifique dit d'accès sur une voie balise montante, au moins une demande de connexion, dite demande d'accès,
- un contrôleur de station de base ayant en charge ladite station de base détermine, pour chacun desdits récepteurs, le niveau et/ou la qualité du signal, dit d'accès, constitué par ladite demande et reçu au niveau de chacun desdits récepteurs, et sélectionne ainsi celui desdits récepteurs destiné à assurer la transmission des signaux de données utiles en provenance dudit mobile comme étant le récepteur pour lequel le signal d'accès a la meilleure qualité et/ou le meilleur niveau,
- un canal de trafic dit montant est affecté audit mobile sur ladite fréquence de trafic montante, ledit canal de trafic montant n'étant utilisé que pour ledit mobile,
- un canal de trafic correspondant, dit descendant, est affecté audit mobile sur ladite fréquence de trafic descendante, ce canal de trafic étant décalé dans le temps par rapport audit canal de trafic montant,
- chacun des autres mobiles évoluant dans ladite cellule principale et connecté à ladite station de base est associé à un canal de trafic descendant sur ladite fréquence de trafic descendante, décalé dans le temps par rapport à tous les canaux de trafic affectés aux autres mobiles sur ladite fréquence de trafic descendante, et à un canal de trafic montant sur ladite fréquence de trafic montante, décalé dans le temps par rapport à tous les canaux de trafic affectés aux autres mobiles sur ladite fréquence de trafic montante.

2. Procédé d'échange de données selon la revendication 1 caractérisé en ce que ledit échange de données est en outre destiné à maintenir la connexion dudit mobile à ladite station de base lorsque ledit mobile passe de l'une desdites cellules élémentaires, dite ancienne cellule élémentaire, à une autre, dite nouvelle cellule élémentaire, ledit procédé comportant alors les opérations suivantes :
- pendant l'intervalle de temps correspondant au canal de trafic montant affecté audit mobile, chacun desdits récepteurs, y compris celui, dit ancien récepteur, assurant la transmission des signaux de données utiles émis par ledit mobile, reçoit les signaux de données utiles émis par ledit mobile,
- après démodulation de chacun desdits signaux de données utiles, le signal obtenu par combinaison desdits signaux de données utiles est ramené en bande de base et transmis audit contrôleur,
- la communication se poursuit sur le même canal de trafic montant par l'intermédiaire d'un nouveau récepteur.

3. Procédé d'échange de données selon la revendication 1 caractérisé en ce que ledit échange de données est en outre destiné à maintenir la connexion dudit mobile à ladite station de base lorsque ledit mobile passe de l'une desdites cellules élémentaires, dite ancienne cellule élémentaire, à une autre, dite nouvelle cellule élémentaire, ledit procédé comportant alors les opérations suivantes :
- pendant l'intervalle de temps correspondant au canal de trafic montant affecté audit mobile, chacun desdits récepteurs, y compris celui, dit ancien récepteur, assurant la transmission des signaux de données utiles émis par ledit mobile, reçoit les signaux de données utiles émis par ledit mobile,
- les signaux de données utiles issus de chacun desdits récepteurs sont ramenés en bande de base, puis transmis audit contrôleur de station de base,
- ledit contrôleur de station de base interrompt la communication et sélectionne, selon un ou plusieurs critères prédéterminés, celui desdits récepteurs destiné à assurer la poursuite de la communication, et donc la transmission desdits signaux de données utiles en provenance dudit mobile audit contrôleur de station de base,
- la communication est rétablie sur le même canal de trafic montant,
- les signaux de données utiles et de données de signalisation en provenance dudit mobile et issus dudit récepteur sélectionné sont ramenés en bande de base puis transmis audit contrôleur.

4. Procédé selon la revendication 3 caractérisé en ce que l'un desdits critères prédéterminés est le niveau de réception au sein de chacun desdits récepteurs.

5. Procédé selon l'une des revendications 3 ou 4 caractérisé en ce que l'un desdits critères prédéterminés est la qualité, avant ou après décodage, du signal issu de chacun desdits récepteurs.

6. Contrôleur de stations de base caractérisé en ce qu'il est adapté à la mise en oeuvre du procédé selon l'une des revendications 1 à 5.

7. Station de base caractérisée en ce qu'elle est adaptée à la mise en oeuvre du procédé selon l'une des revendications 1 à 5.

## Patentansprüche

1. Verfahren zum Datenaustausch zwischen einer Basisstation eines zellularen Mobilfunk-Kommunikationsnetzes einerseits, die dazu bestimmt ist, Daten in Form von Funksignalen mit mobilen Geräten (MS) auszutauschen, die sich in einer begrenzten geographischen Zone bewegen, die als Hauptzelle (C) bezeichnet wird, wobei diese Hauptzelle (C) eine Mehrzahl von sogenannten Elementarzellen (S₁, S₂, S₃) abdeckt, die jeweils einem bestimmten Abschnitt der Hauptzelle (C) entsprechen und von denen jede einem Empfänger (R₁, R₂ R₃) zugeordnet ist, der mit einer Richtantenne (A₁, A₂, A₃) versehen ist, wobei die Basisstation einen einzigen Sender (E) umfaßt, der mit einer ungerichteten Antenne (Ao) versehen ist und die Funkabdeckung beim Senden aller der Elementarzellen (S₁, S₂, S₃) gewährleistet, und einem sich in der Hauptzelle bewegenden mobilen Gerät andererseits, wobei dieser Datenaustausch insbesondere dazu bestimmt ist, zwischen dem mobilen Gerät und der Basisstation eine Funkverbindung zu etablieren, derart, daß ein Verkehrskanal auf einer Aufwärts-Verkehrsfrequenz und ein Verkehrskanal auf einer Abwärts-Verkehrsfrequenz dem mobilen Gerät für die Übertragung von Nutzdaten zugewiesen werden, wobei das Verfahren die folgenden Operationen umfaßt:
- das mobile Gerät sendet an die Basisstation auf einem als Zugangs kanal bezeichneten speziellen Kanal auf einem Aufwärts-Leitweg wenigstens eine als Zugangsanforderung bezeichnete Verbindungsanforderung,
- ein Basisstationscontroller, der für die Basisstation zuständig ist, bestimmt für jeden der Empfänger den Pegel und/oder die Qualität des als Zugangssignal bezeichneten Signals, das durch die Anforderung gebildet ist und an jedem der Empfänger empfangen wird, und wählt so als denjenigen der Empfänger, der dazu bestimmt ist, die Übertragung der von dem mobilen Gerät kommenden Nutzdatensignale zu gewährleisten, denjenigen Empfänger aus, für den das Zugangssignal die beste Qualität und/oder den besten Pegel hat,
- ein sogenannter Aufwärts-Verkehrskanal wird dem mobilen Gerät auf der Aufwärts-Verkehrsfrequenz zugewiesen, wobei der Aufwärts-Verkehrskanal nur für dieses mobile Gerät benutzt wird,
- ein entsprechender sogenannter Abwärts-Verkehrs kanal wird dem mobilen Gerät auf der Abwärts-Verkehrsfrequenz zugewiesen, wobei dieser Verkehrskanal in Bezug auf den Aufwärts-Verkehrskanal zeitlich versetzt ist,
- jedes der anderen sich in der Hauptzelle bewegenden und an die Basisstation angeschlossenen mobilen Geräte wird einem Abwärts-Verkehrs kanal auf der Abwärts-Verkehrsfrequenz zugeordnet, der in Bezug auf alle den anderen mobilen Geräten auf der Abwärts-Verkehrsfrequenz zugewiesenen Verkehrskanäle zeitlich versetzt ist, und einem Aufwärts-Verkehrskanal auf der Aufwärts-Verkehrsfrequenz zugeordnet, der zeitlich in Bezug auf alle den anderen mobilen Geräten auf der Aufwärts-Verkehrsfrequenz zugewiesenen Verkehrskanäle zeitlich versetzt ist.

2. Verfahren zum Datenaustausch nach Anspruch 1, dadurch gekennzeichnet, daß der Datenaustausch ferner dazu bestimmt ist, die Verbindung des mobilen Gerätes mit der Basisstation aufrechtzuerhalten, wenn das mobile Gerät von einer der Elementarzellen, als ehemalige Elementarzelle bezeichnet, in eine andere, als neue Elementarzelle bezeichnete Zelle übergeht, wobei das Verfahren dann die folgenden Operationen umfaßt:
- während des Zeitintervalls, das dem dem mobilen Gerät zugewiesenen Aufwärts-Verkehrskanal entspricht, empfängt jeder der Empfänger einschließlich des sogenannten ehemaligen Empfängers, der die Übertragung der von dem mobilen Gerät gesendeten Nutzdatensignale gewährleistet, die von dem mobilen Gerät gesendeten Nutzdatensignale,
- nach Demodulierung jedes der Nutzdatensignale wird das durch Kombination der Nutzdatensignale erhaltene Signal in das Basisband rückversetzt und an den Controller übertragen,
- die Kommunikation wird auf dem gleichen Aufwärts-Verkehrskanal über einen neuen Empfänger fortgesetzt.

3. Verfahren zum Datenaustausch nach Anspruch 1, dadurch gekennzeichnet, daß der Datenaustausch ferner dazu bestimmt ist, die Verbindung des mobilen Gerätes mit der Basisstation aufrechtzuerhalten, wenn das mobile Gerät von einer der Elementarzellen, als ehemalige Elementarzelle bezeichnet, in eine andere, als neue Elementarzelle bezeichnete Zelle übergeht, wobei das Verfahren dann die folgenden Operationen umfaßt:
- während des Zeitintervalls, das dem dem mobilen Gerät zugewiesenen Aufwärts-Verkehrskanal entspricht, empfängt jeder der Empfänger einschließlich des sogenannten ehemaligen Empfängers, der die Übertragung der von dem mobilen Gerät gesendeten Nutzdatensignale gewährleistet, die von dem mobilen Gerät gesendeten Nutzdatensignale,
- die von jedem der Empfänger ausgegebenen Nutzdatensignale werden ins Basisband rückversetzt und dann an den Basisstationscontroller übertragen,
- der Basisstationscontroller unterbricht die Kommunikation und wählt nach einem oder mehreren vorgegebenen Kriterien denjenigen der Empfänger aus, der dazu bestimmt ist, die Fortsetzung der Kommunikation und damit die Übertragung der vom mobilen Gerät kommenden Nutzdatensignale an den Basisstationscontroller zu gewährleisten,
- die Kommunikation wird auf dem gleichen Aufwärts-Verkehrskanal wieder etabliert,
- die von dem mobilen Gerät kommenden und von dem ausgewählten Empfänger ausgegebenen Nutz- und Signalisierungsdatensignale werden ins Basisband rückversetzt und dann an den Controller übertragen.

4. Verfahren nach Anspruch 3, dadurch gekennzeichnet, daß eines der vorgegebenen Kriterien der Empfangspegel in jedem der Empfänger ist.

5. Verfahren nach einem der Ansprüche 3 oder 4, dadurch gekennzeichnet, daß eines der vorgegebenen Kriterien die Qualität, vor oder nach Decodierung, des von jedem der Empfänger ausgegebenen Signals ist.

6. Basisstationscontroller, dadurch gekennzeichnet, daß er an die Ausführung des Verfahrens nach einem der Ansprüche 1 bis 5 angepaßt ist.

7. Basisstation, dadurch gekennzeichnet, daß sie an die Ausführung des Verfahrens nach einem der Ansprüche 1 bis 5 angepaßt ist.

## Claims

1. Method of exchanging data between, firstly, a base transceiver station of a cellular mobile radio network adapted to exchange data by radio with mobiles (MS) in a delimited geographical area called the main cell (C), said main cell (C) covering a plurality of sectors (S₁, S₂, S₃) each corresponding to a specific portion of said main cell (C) and each associated with a receiver (R₁, R₂, R₃) having a directional antenna (A₁, A₂, A₃), said base transceiver station including a single transmitter (E) having an omnidirectional antenna (A₀) and providing transmit radio coverage for all said sectors (S₁, S₂, S₃) and, secondly, a mobile in said main cell, said exchange of data being adapted in particular to establish a radio link between said mobile and said base transceiver station so that a traffic channel on an upward traffic frequency and a traffic channel on a downward traffic frequency are assigned to said mobile for transmission of speech or computer data, said method comprising the following operations:
- said mobile transmits at least one connection request or access request to said base transceiver station on a specific access channel on an upward control channel,
- a base station controller controlling said base transceiver station determines, for each of said receivers, the level and/or quality of the access signal constituted by said request and received at each of said receivers and in this way selects whichever of said receivers for which the access signal has the best quality and/or the best level as the receiver to be used for speech or computer data signals transmitted by said mobile,
- an upward traffic channel is assigned to said mobile for its exclusive use on said upward traffic frequency,
- a respective downward traffic channel is assigned to said mobile on said downward traffic frequency, said traffic channel being shifted in time relative to said upward traffic channel, and
- each of the other mobiles in said main cell and connected to said base transceiver station is associated with a downward traffic channel on said downward traffic frequency shifted in time relative to all the traffic channels assigned to the other mobiles on said downward traffic frequency and to an upward traffic channel on said upward traffic frequency shifted in time relative to all the traffic channels assigned to the other mobiles on said upward traffic frequency.

2. Method of exchanging data according to claim 1 characterised in that said exchange of data is additionally adapted to maintain access of said mobile to said base transceiver station when said mobile moves from an old sector to a new sector, said method then including the following operations:
- during the time slot corresponding to the upward traffic channel assigned to said mobile each of said receivers, including the old receiver used for the speech or computer data signals transmitted by said mobile, receives the speech or computer data signals transmitted by said mobile,
- after demodulation of each of said speech or computer data signals, the signal obtained by combining said speech or computer data signals is shifted into the base band and transmitted to said base station controller, and
- communication continues on the same upward traffic channel via a new receiver.

3. Method of exchanging data according to claim 1 characterised in that said exchange of data is further adapted to maintain access of said mobile to said base transceiver station when said mobile moves from an old sector to a new sector, said method then including the following operations:
- during the time slot corresponding to the upward traffic channel assigned to said mobile each of said receivers, including the old receiver used for the speech or computer data signals transmitted by said mobile, receives the speech or computer data signals transmitted by said mobile,
- the speech or computer data signals from each of said receivers are shifted into the base band and then transmitted to said base station controller,
- said base station controller interrupts communication and, using one or more predetermined criteria, selects the receiver to be used for further communication and thus for transmission of said speech or computer data signals from said mobile to said base station controller,
- communication is established again on the same upward traffic channel, and
- the speech or computer data signals and signalling data signals from said mobile and from said selected receiver are shifted into the base band and then transmitted to said base station controller.

4. Method according to claim 3 characterised in that one of said predetermined criteria is the receive level at each of said receivers.

5. Method according to claim 3 or claim 4 characterised in that one of said predetermined criteria is the quality of the signal from each of said receivers, before or after decoding.

6. Base station controller characterised in that it is adapted to implement the method according to any one of claims 1 to 5.

7. Base transceiver station characterised in that it is adapted to implement the method according to any one of claims 1 to 5.
